# EUROPÄISCHE PATENTSCHRIFT

(11) **EP 2 464 891 B1**
(45) Veröffentlichungstag und Bekanntmachung des Hinweises auf die Patenterteilung: **23.07.2014**
(21) Anmeldenummer: 10737875.4
(22) Anmeldetag: 26.07.2010
(51) Int. Cl.: F16H 3/00, F16H 57/04

(54) **GETRIEBEANORDNUNG FÜR EIN FAHRZEUG**
TRANSMISSION ARRANGEMENT FOR A VEHICLE
SYSTÈME DE TRANSMISSION POUR UN VÉHICULE

(30) Priorität: 10.08.2009 DE 102009028387
(43) Veröffentlichungstag der Anmeldung: 20.06.2012
(73) Patentinhaber: ZF Friedrichshafen AG, 88038 Friedrichshafen (DE)
(72) Erfinder: WAFZIG, Jürgen, 88097 Eriskirch (DE); MOHR, Mark, 88069 Tettnang (DE); REISCH, Matthias, 88214 Ravensburg (DE)
(86) Internationale Anmeldenummer: PCT/EP2010/060775
(87) Internationale Veröffentlichungsnummer: WO 2011/018328

(56) Entgegenhaltungen:
- EP-A2- 2 072 862
- WO-A1-2008/031844
- DE-A1-102005 013 137
- DE-A1-102005 042 360

## Beschreibung

Die vorliegende Erfindung betrifft eine Getriebeanordnung für ein Fahrzeug mit zumindest einer nasslaufenden Kupplung als Anfahrelement gemäß der im Oberbegriff des Patentanspruches 1 näher definierten Art.

Aus der Fahrzeugtechnik sind Automatikgetriebe beispielsweise für Kraftfahrzeuge hinreichend bekannt. Neben Automatikgetrieben mit Planetensätzen, Lastschaltelementen und einem Wandler als Anfahrelement werden auch zunehmend Doppelkupplungsgetriebe eingesetzt, die zwei voneinander unabhängige Teilgetriebe aufweisen, die z. B. als Stirnradgetriebe in Vorgelegebauweise mit jeweils zwei Kupplungen betrieben werden. Die Doppelkupplungsgetriebe haben im Gegensatz zu den Automatikgetrieben den Vorteil, dass ein besserer Wirkungsgrad erreicht wird, jedoch den Nachteil der geringeren Belastbarkeit des Anfahrelements.

Aus der gattungsgemässen Druckschrift DE 10 2005 013 137 A1 ist ein Verfahren und eine Vorrichtung zur Steuerung einer Ölversorgung für ein Automatikgetriebe und ein flüssigkeitsgekühltes bzw. nasslaufendes Anfahrelement in einem Fahrzeug bekannt. Die Vorrichtung umfasst eine von einem Fahrmotor angetriebene Ölpumpe und eine elektrisch antreibbare Ölpumpe zur Versorgung einer hydraulischen Steuereinrichtung des Automatikgetriebes und des Anfahrelementes, wobei die Steuereinrichtung in einen Hochdruckzweig und einen Niederdruckzweig unterteilt ist. Im Rahmen des Verfahrens ist vorgesehen, dass die elektrisch antreibbare Ölpumpe zumindest bei Stillstand des Fahrmotors und bei Vorliegen weiterer Betriebsbedingungen eine Ölpumpleistung zur Versorgung der hydraulischen Steuereinrichtung bereitstellt.

Durch den Einsatz von gekühlten, nasslaufenden Kupplungen als Anfahrelement wird die thermische Belastbarkeit des Anfahrelements gesteigert. Die hydraulische Betätigung der nasslaufenden Kupplung benötigt jedoch ein hohes Druckniveau, welches den Gesamtwirkungsgrad des Getriebes negativ beeinflusst.

Der vorliegenden Erfindung liegt die Aufgabe zu Grunde, eine Getriebeanordnung der eingangs beschriebenen Gattung vorzuschlagen, bei der die Belastbarkeit des Anfahrelements ohne negative Beeinflussung des Wirkungsgrades erhöht wird.

Diese Aufgabe wird erfindungsgemäß durch die Merkmale des Patentanspruches 1 gelöst. Weitere vorteilhafte Ausgestaltungen ergeben sich aus den Unteransprüchen und den Zeichnungen.

Demnach wird eine Getriebeanordnung für ein Fahrzeug mit zumindest einer nasslaufenden Kupplung als Anfahrelement vorgeschlagen, wobei eine Kühlmittel- und Schmiermittelversorgung über zumindest eine Pumpeneinrichtung oder dergleichen vorgesehen ist, die mit einem Antriebsmotor des Fahrzeuges angetrieben wird. Erfindungsgemäß ist der Antrieb der Pumpeneinrichtung so ausgeführt, dass der Fördervolumenstrom bzw. die Leistung der Pumpeneinrichtung proportional zu der Differenzdrehzahl zwischen der Drehzahl des Antriebsmotors und der Drehzahl der zu schmierenden bzw. zu kühlenden Kupplung ist.

Dadurch ergibt sich der erhebliche Vorteil, dass bei geschlossener Kupplung, wenn nämlich keine Differenzdrehzahl vorliegt, auch keine Pumpenverluste auftreten, so dass der Wirkungsgrad des Getriebes auch bei gesteigerter Belastbarkeit des Anfahrelements insgesamt verbessert wird.

Im Rahmen einer vorteilhaften Ausführungsvariante der Erfindung kann vorgesehen sein, dass z. B. ein Rotor der Pumpeinrichtung direkt oder auch indirekt mit der Motorwelle des Antriebsmotors und z. B. ein Gehäuse der Pumpeinrichtung mit dem Abtrieb der Kupplung direkt oder indirekt verbunden sind. Dadurch wird zum Beispiel beim Anfahren des Fahrzeuges, wenn die Differenzdrehzahl maximal ist, ein hoher Fördervolumenstrom der Pumpeneinrichtung erzeugt, so dass die in diesem Zustand auftretende hohe thermische Belastung an der Kupplung durch die hohe Kühlleistung reduziert wird. Bei geschlossener Kupplung dagegen, wenn nahezu keine Kühlleistung erforderlich ist, da keine Differenzdrehzahl anliegt, geht der Fördervolumenstrom auf den Wert Null zurück, so dass keine Pumpenverluste erzeugt werden. Somit wird eine belastungsabhängige Ansteuerung der Pumpeneinrichtung auch ohne kostenintensives Volumenstromregelventil mit der erfindungsgemäßen Getriebeanordnung realisiert.

Vorzugsweise kann die Pumpeneinrichtung beziehungsweise der Antrieb der Pumpeneinrichtung in Kraftflussrichtung zwischen dem Antriebsmotor und der zu schmierenden und zu kühlenden Kupplung angeordnet sein. Insbesondere liegt der Antrieb dann zwischen dem Eintrieb des Getriebes und dem Abtrieb der Kupplung.

Die vorgeschlagene Getriebeanordnung kann für beliebige Getriebearten eingesetzt werden. Wenn beispielsweise die Getriebeanordnung mit einem Doppelkupplungsgetriebe realisiert wird, kann beispielsweise die Pumpeneinrichtung zumindest teilweise in ein Doppelkupplungsmodul des Getriebes integriert werden, woraus sich ein Bauraum- und Montagevorteil ergibt. Beispielsweise kann auch nur der Antrieb der Pumpeneinrichtung in dem Doppelkupplungsmodul angeordnet sein. Es sind jedoch auch andere konstruktive Ausgestaltungen möglich.

Bei dem als Doppelkupplungsgetriebe ausgebildeten Getriebe kann vorzugsweise das Gehäuse der Pumpeneinrichtung mit der Kupplung verbunden sein, die dem Teilgetriebe mit dem kleinsten Gang zugeordnet ist, da diese Kupplung als Anfahrelement verwendet wird. Die andere Kupplung kann ebenfalls eine gekühlte, nasslaufende Kupplung oder auch eine Trockenkupplung sein.

Unabhängig davon welche Art von Getriebe bei der Getriebeanordnung eingesetzt wird, kann die nasslaufende Kupplung vorzugsweise als gekühlte Mehrscheiben-Lamellenkupplung oder dergleichen ausgebildet werden. Es ist auch der Einsatz von anderen ähnliche Eigenschaften aufweisende Kupplungen beziehungsweise Drehmomentübertragungselementen möglich.

Bei der erfindungsgemäßen Getriebeanordnung kann vorzugsweise als Pumpeinrichtung eine Niederdruck-Schmier- und Kühlölpumpe verwendet werden. Auch hier ist es möglich, andere ähnliche Eigenschaften aufweisende Pumpen einzusetzen.

Vorzugsweise kann die als Anfahrelement ausgeführte Kupplung elektrisch oder elektrohydraulisch oder auch magnetisch betätigt werden.

Zusammenfassend ergeben sich bei der vorgeschlagenen Getriebeanordnung unter anderem die Vorteile eines Doppelkupplungsgetriebes mit der hohen Belastbarkeit einer gekühlten Mehrscheiben-Lamellenkupplung und einer Anordnung einer Niederdruck-Schmierölpumpe im Doppelkupplungsmodul vereint.

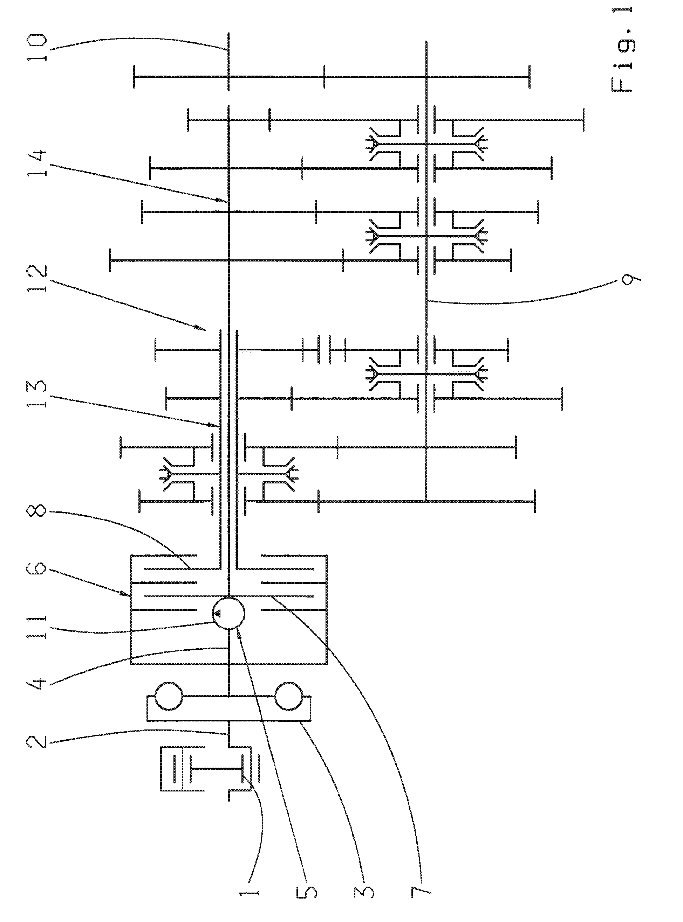

Nachfolgend wird die vorliegende Erfindung anhand der Zeichnung weiter erläutert. Die einzige Figur der Erfindung zeigt ein schematisches Schnittbild einer möglichen Ausführungsvariante einer erfindungsgemäßen Getriebeanordnung mit einem als Doppelkupplungsgetriebe 12 ausgebildeten Getriebe bei einem Fahrzeug.

Der in der Figur dargestellte Antriebsstrang umfasst einen Antriebsmotor 1 des Fahrzeuges, dessen Antriebswelle 2 über einen Torsionsdämpfer 3 mit einem Rotor 4 einer Pumpeneinrichtung 5 zur Schmiermittel- und Kühlmittelversorgung gekoppelt ist. Die Pumpeneinrichtung 5 ist in einem Doppelkupplungsmodul 6 des Doppelkupplungsgetriebes 12 integriert. Das Doppelkupplungsmodul 6 umfasst eine erste Kupplung 7, die einem ersten Teilgetriebe 14 mit nicht weiter bezeichneten Bauteilen zugeordnet ist, und eine zweite Kupplung 8, die einem zweiten Teilgetriebe 13 mit ebenfalls nicht weiter bezeichneten Bauteilen zugeordnet ist. Die beiden Teilgetriebe 13, 14 stehen jeweils über Zahnradstufen mit einer Vorgelegewelle 9 in Eingriff, die mit einem Abtrieb 10 des Doppelkupplungsgetriebes 12 gekoppelt ist.

Die in dem Doppelkupplungsmodul 6 integrierte Pumpeneinrichtung 5 ist mit ihrem Gehäuse 11 mit der ersten als Anfahrelement ausgebildeten Kupplung 7 verbunden, die dem Teilgetriebe 14 mit dem kleinsten Gang zugeordnet ist. Zumindest die erste Kupplung 7 ist als gekühlte Mehrscheiben-Lamellenkupplung ausgeführt.

Dadurch, dass der Rotor 4 der Pumpeneinrichtung 5 mit der Drehzahl des Antriebsmotors gedreht wird und das Gehäuse 11 der Pumpeneinrichtung 5 mit der Drehzahl des Abtriebs der Kupplung 7 gedreht wird, ist der Fördervolumenstrom der Pumpeneinrichtung 5 proportional zur Differenzdrehzahl zwischen der Drehzahl des Antriebsmotors 1 und der Drehzahl des Anfahrelements beziehungsweise der Kupplung 7. Dadurch ergibt sich eine belastungsabhängige Steuerung der Pumpeneinrichtung 5. Somit kann auf ein kostenintensives Volumenstromregelventil und dessen elektrohydraulische Ansteuerung verzichtet werden.

Bei einer hohen Differenzdrehzahl, also bei zum Beispiel einem Rennstart, wird ein maximaler Fördervolumenstrom bei der Pumpeinrichtung 5 erreicht, um die thermische Belastung der Kupplung 7 möglichst gering zu halten. Bei geschlossener Kupplung, das heißt, beim Fahren in den ungeraden Gängen fallen keine Pumpenverluste an, da keine Differenzdrehzahl anliegt, weil der Rotor 4 der Pumpeinrichtung 5 mit der gleichen Drehzahl wie das Gehäuse 11 der Pumpeinrichtung 5 rotiert. Damit wird der Wirkungsgrad des automatischen Getriebes auch bei einer hohen Belastbarkeit des Anfahrelements reduziert und nahe an den Wirkungsgrad eines Handschaltgetriebes gebracht.

### Bezugszeichen

- 1: Antriebsmotor
- 2: Antriebswelle
- 3: Torsionsdämpfer
- 4: Rotor
- 5: Pumpeneinrichtung
- 6: Doppelkupplungsmodul
- 7: erste Kupplung
- 8: zweite Kupplung
- 9: Vorgelegewelle
- 10: Abtrieb
- 11: Gehäuse
- 12: Doppelkupplungsgetriebe
- 13: zweites Teilgetriebe
- 14: erstes Teilgetriebe

## Patentansprüche

1. Getriebeanordnung für ein Fahrzeug mit zumindest einer nasslaufenden Kupplung (7) als Anfahrelement, wobei eine Kühlmittel- und Schmiermittelversorgung über zumindest eine Pumpeneinrichtung (5) vorgesehen ist, die von einem Antriebsmotor (1) des Fahrzeuges antreibbar ist, **dadurch gekennzeichnet, dass** die Pumpeneinrichtung derart antreibbar ist, dass der Fördervolumenstrom der Pumpeneinrichtung (5) proportional zu der Differenzdrehzahl zwischen der Drehzahl des Antriebsmotors (1) und der Drehzahl der als Anfahrelement ausgebildeten Kupplung (7) ist.

2. Getriebeanordnung nach Anspruch 1, **dadurch gekennzeichnet, dass** ein Rotor (4) der Pumpeneinrichtung (5) direkt oder indirekt mit der Antriebswelle (2) des Antriebsmotors (1) und ein Gehäuse (11) der Pumpeneinrichtung (5) mit dem Abtrieb der als Anfahrelement ausgebildeten Kupplung (7) direkt oder indirekt verbunden sind.

3. Getriebeanordnung nach einem der vorangehenden Ansprüche, **dadurch gekennzeichnet, dass** die Pumpeneinrichtung (5) in Kraftschlussrichtung zwischen dem Antriebsmotor (1) und der Kupplung (7, 8) angeordnet ist.

4. Getriebeanordnung nach einem der vorangehenden Ansprüche, **dadurch gekennzeichnet, dass** bei einem als Doppelkupplungsgetriebe (12) ausgebildeten Getriebe die Pumpeneinrichtung (5) zumindest teilweise in ein Doppelkupplungsmodul (6) des Doppelkupplungsgetriebes (12) integriert ist.

5. Getriebeanordnung nach einem der vorangehenden Ansprüche, **dadurch gekennzeichnet, dass** bei einem als Doppelkupplungsgetriebe (12) ausgebildeten Getriebe das Gehäuse (11) der Pumpeneinrichtung (5) mit der Kupplung (7) verbunden ist, die dem Teilgetriebe (14) mit dem kleinsten Gang zugeordnet ist.

6. Getriebeanordnung nach einem der vorangehenden Ansprüche, **dadurch gekennzeichnet, dass** zumindest die als Anfahrelement ausgebildete Kupplung (7) als gekühlte Mehrscheiben-Lamellenkupplung ausgeführt ist.

7. Getriebeanordnung nach einem der vorangehenden Ansprüche, **dadurch gekennzeichnet, dass** die Pumpeneinrichtung (5) als Niederdruck-Schmier- und Kühlölpumpe ausgebildet ist.

8. Getriebeanordnung nach einem der vorangehenden Ansprüche, **dadurch gekennzeichnet, dass** die Kupplung (7, 8) elektrisch oder elektrohydraulisch oder magnetisch betätigbar ist.

## Claims

1. Gearbox arrangement for a vehicle, having at least one wet-running clutch (7) as a starting element, wherein a supply of coolant and lubricant is realized by means of at least one pump device (5) that can be driven by a drive engine (1) of the vehicle, **characterized in that** the pump device can be driven such that the delivery volume flow rate of the pump device (5) is proportional to the rotational speed difference between the rotational speed of the drive engine (1) and the rotational speed of the clutch (7) designed as a starting element.

2. Gearbox arrangement according to Claim 1, **characterized in that** a rotor (4) of the pump device (5) is connected directly or indirectly to the drive shaft (2) of the drive engine (1), and a housing (11) of the pump device (5) is connected directly or indirectly to the drive output of the clutch (7) designed as a starting element.

3. Gearbox arrangement according to one of the preceding claims, **characterized in that** the pump device (5) is arranged between the drive engine (1) and the clutch (7, 8) in the power transmission direction.

4. Gearbox arrangement according to one of the preceding claims, **characterized in that**, in the case of a gearbox in the form of a dual-clutch gearbox (12), the pump device (5) is at least partially integrated into a dual-clutch module (6) of the dual-clutch gearbox (12).

5. Gearbox arrangement according to one of the preceding claims, **characterized in that**, in the case of a gearbox in the form of a dual-clutch gearbox (12), the housing (11) of the pump device (5) is connected to that clutch (7) which is assigned to the component gearbox (14) with the lowest gear.

6. Gearbox arrangement according to one of the preceding claims, **characterized in that** at least the clutch (7) designed as a starting element is in the form of a cooled multi-plate lamellar clutch.

7. Gearbox arrangement according to one of the preceding claims, **characterized in that** the pump device (5) is in the form of a low-pressure lubrication and cooling oil pump.

8. Gearbox arrangement according to one of the preceding claims, **characterized in that** the clutch (7, 8) is electrically or electrohydraulically or magnetically actuable.

## Revendications

1. Système de transmission pour un véhicule comprenant au moins un embrayage humide (7) en tant qu'élément de démarrage, une alimentation en réfrigérant et en lubrifiant étant prévue par le biais d'au moins un dispositif de pompe (5) qui peut être entraîné par un moteur d'entraînement (1) du véhicule, **caractérisé en ce que** le dispositif de pompe peut être entraîné de telle sorte que le débit volumique refoulé du dispositif de pompe (5) soit proportionnel à la vitesse de rotation différentielle entre la vitesse de rotation du moteur d'entraînement (1) et la vitesse de rotation de l'embrayage (7) réalisé en tant qu'élément de démarrage.

2. Système de transmission selon la revendication 1, **caractérisé en ce qu'**un rotor (4) du dispositif de pompe (5) est connecté directement ou indirectement à l'arbre d'entraînement (2) du moteur d'entraînement (1) et un boîtier (11) du dispositif de pompe (5) est connecté directement ou indirectement à la sortie de l'embrayage (7) réalisé en tant qu'élément de démarrage.

3. Système de transmission selon l'une quelconque des revendications précédentes, **caractérisé en ce que** le dispositif de pompe (5) est disposé dans la direction du flux de force entre le moteur d'entraînement (1) et l'embrayage (7, 8).

4. Système de transmission selon l'une quelconque des revendications précédentes, **caractérisé en ce que** dans le cas d'une transmission réalisée sous forme de transmission à double embrayage (12), le dispositif de pompe (5) est intégré au moins en partie dans un module d'embrayage double (6) de la transmission à double embrayage (12).

5. Système de transmission selon l'une quelconque des revendications précédentes, **caractérisé en ce que** dans le cas d'une transmission réalisée sous forme de transmission à double embrayage (12), le boîtier (11) du dispositif de pompe (5) est connecté à l'embrayage (7) qui est associé à la transmission partielle (14) ayant la plus petite vitesse.

6. Système de transmission selon l'une quelconque des revendications précédentes, **caractérisé en ce qu'**au moins l'embrayage (7) réalisé en tant qu'élément de démarrage est réalisé sous forme d'embrayage à disques multiples refroidi.

7. Système de transmission selon l'une quelconque des revendications précédentes, **caractérisé en ce que** le dispositif de pompe (5) est réalisé sous forme de pompe basse pression à huile de lubrification et de refroidissement.

8. Système de transmission selon l'une quelconque des revendications précédentes, **caractérisé en ce que** l'embrayage (7, 8) peut être commandé électriquement ou électrohydrauliquement ou magnétiquement.
